(19) Europäisches Patentamt
European Patent Office
Office européen des brevets

(11) **EP 3 661 888 B1**

(12) **FASCICULE DE BREVET EUROPEEN**

(45) Date de publication et mention
de la délivrance du brevet:
**24.05.2023 Bulletin 2023/21**

(21) Numéro de dépôt: **18712953.1**

(22) Date de dépôt: **05.03.2018**

(51) Classification Internationale des Brevets (IPC):
**C03C 25/32** *(2018.01)* **D04H 1/4209** *(2012.01)*
**D04H 1/587** *(2012.01)* **D04H 1/64** *(2012.01)*

(52) Classification Coopérative des Brevets (CPC):
**C03C 25/1095; C03C 25/32; C09D 103/02;
C09J 103/02**

(86) Numéro de dépôt international:
**PCT/FR2018/050496**

(87) Numéro de publication internationale:
**WO 2019/025672 (07.02.2019 Gazette 2019/06)**

(54) **PROCEDE DE FABRICATION DE LAINE MINERALE**

VERFAHREN ZUR HERSTELLUNG VON STEINWOLLE

METHOD FOR THE PRODUCTION OF MINERAL WOOL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.07.2017 FR 1757284**

(43) Date de publication de la demande:
**10.06.2020 Bulletin 2020/24**

(73) Titulaire: **SAINT-GOBAIN ISOVER
92400 Courbevoie (FR)**

(72) Inventeurs:
• **AZEVEDO, Joël**
**91190 Gif sur Yvette (FR)**
• **KIEFER, Lionel**
**21 560 Arc-Sur-Tille (FR)**

(74) Mandataire: **Saint-Gobain Recherche
Département Propriété Industrielle
39 Quai Lucien Lefranc
93300 Aubervilliers (FR)**

(56) Documents cités:
**WO-A1-2012/118939     WO-A1-2015/132518
WO-A1-2015/181458**

**Description**

La présente demande concerne un procédé de fabrication de produits d'isolation thermique à base de laine minérale utilisant des agents anti-poussière de type émulsion huile-dans-eau.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on pulvérise sur les fibres encore chaudes une composition aqueuse d'encollage, également appelée liant, qui subit ensuite une réaction de thermodurcissement à des températures d'environ 200 °C.

Les résines phénoliques utilisées pendant plusieurs dizaines d'années en tant que liants sont remplacées de plus en plus par des produits issus de sources renouvelables et n'émettant pas, ou très peu, de formaldéhyde, composé considéré comme pouvant nuire à la santé humaine.

Il est ainsi connu, par exemple de US 8197587 et de US 2011/0223364, de lier des fibres minérales avec des compositions aqueuses d'encollage exemptes de formaldéhyde contenant, en tant que réactifs thermoréticulables, des hydrates de carbone et des acides polycarboxyliques.

Par ailleurs il est connu d'incorporer dans une composition aqueuse d'encollage pour fibres minérales un agent de réduction des poussières. L'agent anti-poussière le plus communément utilisé est une huile minérale. Pour garantir un mélange homogène de l'huile minérale avec la composition aqueuse d'encollage et une quantité d'agent anti-poussière appliquée qui est stable au cours du temps, il a été proposé de conditionner l'huile minérale sous forme d'une émulsion huile-dans-eau stabilisée par des agents tensioactifs et/ou des agents épaississants de la phase aqueuse.

On recherche généralement des émulsions les plus fines et les plus stables possible. La présente invention est basée sur la découverte que la grande stabilité et finesse des émulsions huile-dans-eau utilisées jusqu'ici pourrait limiter l'efficacité des agents anti-poussières.

On suppose en effet en général que la fraction d'huile minérale efficace pour retenir les poussières est celle étalée à la surface de la couche de liant (i.e. à l'interface liant/air) durci à la fin de l'étape de cuisson. L'huile minérale doit donc se séparer - pendant l'étape d'application sur les fibres ou immédiatement après - des autres ingrédients de la composition d'encollage pour former une couche superficielle enrobant la couche de liant. En effet, des gouttelettes d'huile minérale piégées dans le liant durci seraient inefficaces pour retenir les particules de poussière.

Le problème technique à la base de la présente invention résulte donc d'une double contrainte, à savoir

- de la nécessité de disposer d'une émulsion huile-dans-eau d'agent anti-poussières stable jusqu'au moment de l'application de la composition d'encollage, et
- de la nécessité, au moment de la pulvérisation de la composition d'encollage, de déstabiliser rapidement l'émulsion pour former une couche d'huile à la surface de la couche de liant.

La Demanderesse, dans le cadre de ses recherches visant à optimiser les émulsions anti-poussières pour laine minérale liée par des liants bio-sourcés, a découvert qu'un paramètre important à prendre en considération était la taille des gouttelettes d'huile. Les émulsions contenant des gouttelettes relativement grandes, ayant une taille de l'ordre de plusieurs microns à plusieurs dizaines, voire plus d'une centaine de microns, étaient plus efficaces que des émulsions plus fines avec des gouttelettes de l'ordre du micron ou submicroniques.

Sans vouloir être liée par une quelconque théorie, les inventeurs pensent que cet effet est dû à une déstabilisation accélérée de l'émulsion. Dans le procédé de fabrication de laine de verre, les aspects cinétiques sont en effet importants : l'émulsion anti-poussière est injectée dans la conduite qui alimente la couronne d'encollage avec la composition aqueuse d'encollage. Quelques secondes plus tard, le mélange composition d'encollage/émulsion anti-poussières est dispersé dans l'air par les buses de pulvérisation et vient au contact des fibres minérales encore chaudes. La viscosité de la composition d'encollage appliquée augmente très vite suite à l'évaporation de la phase aqueuse et le liant est définitivement durci par chauffage dans l'étuve quelques dizaines de secondes plus tard. C'est donc dans les toutes premières secondes après l'application sur les fibres que les gouttelettes d'huile minérale anti-poussières doivent coalescer et former un film à la surface de la couche de liant. Si les gouttelettes d'huile sont trop petites, la déstabilisation de l'émulsion est trop lente et une fraction trop importante d'huile risque de rester piégée sous forme de fines gouttelettes dans la masse du liant durci.

Les émulsions huile-dans-eau utilisées dans la présente invention sont donc plus efficaces que celles de l'état de la technique parce qu'elles contiennent des gouttelettes d'huile plus grosses qui coalescent plus facilement et migrent plus rapidement vers l'interface liant/air. La rupture facilitée de l'émulsion accélère la migration de l'huile vers l'interface liant/air et réduit, voire supprime, la quantité d'huile piégée dans la masse du liant durci. Il en résulte une augmentation de l'efficacité anti-poussières.

La Demanderesse avait déposé une première demande de brevet français (numéro de dépôt 1658166), non encore publiée à la date de dépôt de la présente demande, ayant pour objet l'utilisation d'une émulsion huile-dans-eau contenant au moins un glucide et au moins un agent de réticulation, pour la réduction des poussières d'un matelas de laine minérale. L'émulsion anti-poussières décrite et revendiquée dans cette demande présente une taille de gouttelettes supérieure à 5 $\mu$m et est stabilisée par la combinaison d'au moins un agent tensioactif non-ionique et d'un polyoside hydrosoluble (agent épaississant).

En poursuivant ses recherches dans ce domaine dans le but d'améliorer encore l'efficacité anti-poussières et/ou de réduire le coût des émulsions anti-poussières, la Demanderesse a constaté que la présence de l'épaississant (polyoside), que les inventeurs pensaient d'abord indispensable, n'est en fait pas nécessaire. Il s'est avéré possible d'obtenir une bonne efficacité anti-poussières avec des émulsions huile-dans-eau exemptes de polyoside. La taille des gouttelettes d'huile dans ces émulsions huile-dans-eau exemptes de polyoside est toujours plus importante que celle des émulsions équivalentes contenant des polyosides. Certaines émulsions exemptes de polyoside présentent une stabilité au stockage satisfaisante permettant de les stocker et utiliser *sans* les agiter préalablement, d'autres nécessitent une agitation légère à modérée, avant injection dans la conduite qui alimente la couronne d'encollage avec la composition aqueuse d'encollage.

La présente invention a donc pour objet un procédé de fabrication de produits isolants à base de laine minérale, ledit procédé comprenant

- l'application, sur des fibres de laine minérale, d'une composition aqueuse d'encollage contenant

    ( a) au moins un glucide choisi parmi les sucres réducteurs, les sucres non réducteurs, les sucres hydrogénés et un mélange de ceux-ci, et
    ( b) au moins un agent de réticulation du ou des glucides,

- l'évaporation de la phase solvant de la composition d'encollage et
- le durcissement thermique de la fraction non volatile de la composition, ledit procédé étant caractérisé par le fait que l'on ajoute à la composition d'encollage, de préférence immédiatement avant l'application de celle-ci sur les fibres de laine minérale, une émulsion huile-dans-eau, exempte de polyoside, comprenant de l'eau, une huile minérale et au moins un agent tensioactif, de préférence non-ionique, le diamètre moyen des gouttelettes d'huile de l'émulsion huile-dans-l'eau, déterminé par granulométrie par diffraction laser, étant 5 $\mu$m à et 400 $\mu$m.

On entend par « agent de réticulation de glucides » dans la présente demande un composé capable de réagir, éventuellement en présence d'un catalyseur, avec les glucides et de former avec ces derniers un réseau tridimensionnel au moins partiellement insoluble.

Le procédé selon l'invention comprend donc les quatre étapes suivantes :

    (1) mélange de la composition d'encollage avec l'émulsion huile-dans-eau, appelée ci-après émulsion anti-poussières,
    (2) application du mélange obtenu sur les fibres de laine minérale, de préférence par pulvérisation (dispersion de la composition d'encollage dans l'air)
    (3) évaporation de la phase volatile (principalement de l'eau) du mélange de la composition d'encollage et de l'émulsion anti-poussières, et
    (4) le durcissement thermique de la fraction non volatile à haute température, généralement au moins égale à 200 °C.

L'émulsion huile-dans-eau utilisée dans la présente invention est de préférence une émulsion stable. Cela signifie qu'elle peut être conservée en l'absence d'agitation pendant plusieurs jours à une température comprise entre 20 °C et 50 °C sans que le diamètre moyen des gouttelettes d'huile qu'elle contient augmente de manière significative.

La teneur en huile des émulsions anti-poussière de la présente invention est comprise entre 30 et 70 % en poids, de préférence entre 40 et 65 % en poids et en particulier entre 45 et 60 % en poids.

Les émulsions anti-poussières utilisées dans la présente invention contiennent, en tant qu'agent anti-poussière, de l'huile minérale également appelée paraffine liquide. Elle présente avantageusement une viscosité cinématique à 20 °C comprise entre 100 et 6000 mm$^2$/s.

La Demanderesse a obtenu des résultats particulièrement intéressants avec une huile minérale dite « de haute viscosité » présentant une viscosité cinématique à 20 °C (ISO 3104) comprise entre 1000 et 5000 mm$^2$/s. Cette gamme de viscosité cinématique de l'huile minérale est par conséquent particulièrement préférée.

Des huiles minérales sont disponibles sur le marché par exemple sous les dénominations Novadex C304 ou Catenex S579 (huile haute viscosité) ou Novadex B110 (huile basse viscosité).

L'émulsion anti-poussière huile-dans-eau est stabilisée par un agent tensioactif non-ionique ou un mélange d'agents tensioactifs. Il s'agit de préférence d'un agent tensioactif non-ionique.

On pourra en principe utiliser tous les agents tensioactifs non-ioniques connus pour leurs propriétés émulsionnantes. Ils ont généralement une HLB (de l'anglais *Hydrophilic Lipophilic Balance*) supérieure à 10.

On peut citer à titre d'exemples d'agents tensioactifs non-ioniques utilisables pour la présente invention

- les esters d'acides gras, notamment les dérivés polyalcoxylés d'acides gras,
- les éthers d'alcools gras, notamment les dérivés polyalcoxylés d'alcools gras,
- les dérivés polyalcoxylés de polyols tels que les dérivés polyalcoxylés de glycérol ou de triméthylolpropane,
- les copolymères séquencés de poly(oxyde d'éthylène) et de poly(oxyde de propylène), en particulier les poloxamères qui sont des copolymères triséquencés comportant un bloc central de poly(oxyde de propylène) et deux blocs de poly(oxyde d'éthylène)

La quantité totale d'agent(s) tensioactif(s) est avantageusement comprise entre 0,5 et 5 parties en poids, de préférence entre 1,2 à 3 parties en poids et en particulier entre 1,5 et 2,8 parties en poids pour 100 parties en poids d'huile minérale.

L'émulsion huile-dans-eau de la présente invention peut comprendre un polymère épaississant, c'est-à-dire un polymère organique hydrosoluble à température ambiante, qui n'est pas un polyoside.

La quantité de polymère(s) épaississant(s) est de préférence comprise entre 0,1 et 2 parties en poids, de préférence entre 0,5 et 1 partie en poids pour 100 parties en poids d'huile minérale.

Dans un mode de réalisation préféré, l'émulsion de la présente invention est exempte de polymère épaississant, c'est-à-dire exempte de tout polymère organique hydrosoluble à température ambiante.

Pour préparer l'émulsion huile-dans-eau de la présente invention, on prépare avantageusement d'abord une solution aqueuse de l'agent tensioactif, ou des agents tensioactifs, et, le cas échéant, du polymère épaississant non-polyosidique. La dissolution de ce composant ou de ces composants hydrosolubles peut nécessiter un chauffage modéré de la phase aqueuse, par exemple à une température comprise entre 30 et 80 °C, et une durée d'agitation assez longue comprise entre environ 1 heure et 20 heures. Après retour à la température ambiante, tous les composants restent solubles dans l'eau.

On ajoute ensuite l'huile minérale à la phase aqueuse contenant l'agent tensioactif et, le cas échéant, le polymère épaississant non polyosidique à l'état dissous, puis on soumet le mélange à des forces de cisaillement ou à des ultrasons jusqu'à obtention d'une émulsion.

La Demanderesse a utilisé pour l'obtention des émulsions huile-dans-eau ayant des gouttelettes d'une taille moyenne comprise entre 10 $\mu$m et 400 $\mu$m un disperseur Ultra-Turrax IKA T50 avec un outil de dispersion S50N - G45G, le disperseur fonctionnant à la vitesse maximale (10000 tr/min) pendant environ 1 à 5 min.

La taille des gouttelettes peut être ajustée en modifiant soit la force de cisaillement utilisée (c'est-à-dire la vitesse de cisaillement du disperseur) soit la viscosité de l'huile minérale utilisée :

- pour une huile minérale donnée, plus la force de cisaillement est importante, plus les gouttelettes seront petites ; lorsqu'on souhaite agrandir leur diamètre il faut diminuer la vitesse de rotation de l'outil de dispersion,
- pour une force de cisaillement donnée, plus l'huile sera visqueuse, plus le diamètre des gouttelettes sera important ; lorsqu'on souhaite diminuer le diamètre il convient donc de choisir une huile moins visqueuse.

La quantité en tensioactifs et/ou d'agent épaississant a peu d'influence sur le diamètre des gouttelettes mais influe sur la stabilité des émulsions obtenues.

Le diamètre moyen en volume des gouttelettes d'huile de l'émulsion obtenue est ensuite déterminé par granulométrie laser à l'aide d'un granulomètre par diffraction laser (Metasizer 2000 ou Metasizer 3000) à une température de 20 °C. Pour cela l'émulsion doit être diluée dans un grand volume d'eau (dilution d'environ 1/1000 à 1/100000). La valeur du diamètre moyen est cependant indépendante de la dilution effectuée. On entend par diamètre moyen en volume le diamètre $D_{50}$ volumique, à savoir le diamètre tel que la moitié du volume de la population de gouttelettes est constitué de gouttelettes ayant un diamètre inférieur ou égal à ce diamètre et l'autre moitié du volume est constitué de gouttelettes ayant un diamètre supérieur à ce diamètre.

Comme déjà expliqué en introduction la Demanderesse a constaté que, pour une quantité d'huile appliquée donnée, les émulsions huile-dans-eau de la présente invention présentant une distribution granulométrique avec un diamètre moyen de gouttelettes supérieur à 5 $\mu$m avaient une meilleure efficacité anti-poussière que des émulsions de l'état de la technique contenant des gouttelettes de plus petite taille.

Ce diamètre moyen des gouttelettes d'huile minérale est avantageusement compris entre 10 $\mu$m et 400 $\mu$m, en particulier entre 20 $\mu$m et 300 $\mu$m et plus préférentiellement entre 40 et 200 $\mu$m.

La composition d'encollage à base de glucides et d'agent de réticulation, de préférence de polyacides carboxyliques, utilisée dans la présente invention est connue et décrite par exemple dans US 8197587, WO2010/029266, WO2013/014399, WO2015/181458, WO2012/168619, WO2012/168621, WO2012/072938. D'autres exemples sont décrit dans WO2015/132518 et WO2012/118939.

Dans la présente demande le terme « glucides » a un sens plus large qu'usuellement, car il englobe non seulement les glucides au sens stricte, c'est-à-dire les sucres réducteurs ou hydrates de carbone de formule $C_n(H_2O)_p$ présentant au moins un groupe aldéhyde ou cétone (groupe réducteur), mais également les produits d'hydrogénation de ces hydrates de carbone où le groupe aldéhyde ou cétone a été réduit en alcool. Ce terme englobe également les sucres non-réducteurs constitués de plusieurs motifs glucidiques dont les carbones porteurs de l'hydroxyle hémi-acétalique sont impliqués dans les liaisons osidiques reliant les motifs entre eux.

Le composant glucidique (composant (a)) de la composition d'encollage selon l'invention peut être constitué uniquement de sucres hydrogénés et être exempt de sucres réducteurs ou non réducteurs. Ce mode de réalisation est intéressant car il conduit à des produits isolants particulièrement peu colorés.

Les produits isolants à base de laine minérale obtenus avec une composition d'encollage présentant une certaine teneur en sucres réducteurs sont relativement plus colorés, mais peuvent présenter un réel intérêt économique lié au faible coût des sucres réducteurs ou de mélanges de sucres incomplètement hydrogénés.

Par « sucre hydrogéné » on entend dans la présente invention l'ensemble des produits résultant de la réduction d'un saccharide choisi parmi les monosaccharides, disaccharides, oligosaccharides et polysaccharides et des mélanges de ces produits.

Le sucre hydrogéné est de préférence un produit d'hydrogénation d'un hydrolysat d'amidon.

Les hydrolysats d'amidon sont des produits obtenus par hydrolyse enzymatique et/ou acide d'amidon. Le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

L'hydrogénation du saccharide peut être effectuée par les méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le sucre ou le mélange de sucres (hydrolysat d'amidon) en polyols ou alcools de sucre.

A titre d'exemples de sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

On utilisera de préférence les produits d'hydrogénation d'hydrolysats d'amidon.

De préférence, le sucre hydrogéné ou le mélange de sucres hydrogénés est constitué majoritairement, c'est-à-dire à plus de 50 % en poids, de maltitol (produit d'hydrogénation du maltose, dimère de glucose résultant de l'hydrolyse enzymatique de l'amidon).

Le composant glucidique (composant (a)) peut être constitué uniquement de sucres réducteurs. Toutefois pour les raisons indiquées ci-avant, il contient de préférence une fraction significative de sucres hydrogénés. La proportion de sucres hydrogénés dans le glucide est avantageusement comprise entre 25 et 100 % en poids, et le composant (a) contient alors jusqu'à 75 % en poids d'un ou plusieurs sucres réducteurs ou non-réducteurs, en plus du ou des sucres hydrogénés.

La teneur en sucres hydrogénés du glucide (composant (a)) est de préférence au moins égale à 30 % en poids, en particulier au moins égale à 50 % en poids, et idéalement au moins égale à 70 % en poids.

Les sucres réducteurs englobent les oses (monosaccharides) et osides (disaccharides, oligosaccharides et polysaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucre réducteur.

Les polysaccharides utilisables pour la présente invention ont de préférence une masse molaire moyenne en poids inférieure à 100.000, de préférence inférieure à 50.000, avantageusement inférieure à 10.000.

De préférence, le polysaccharide renferme au moins un motif choisi parmi les aldoses précités, avantageusement le glucose. Sont particulièrement préférés les polysaccharides réducteurs qui sont constitués majoritairement (à plus de 50 % en poids) de motifs de glucose.

Le sucre réducteur peut notamment être un mélange de monosaccharides, d'oligosaccharides et de polysaccharides, notamment une dextrine.

Les dextrines sont des composés répondant à la formule générale $(C_6H_{10}O_5)_n$. Elles sont obtenues par hydrolyse partielle d'amidon. Leur équivalent dextrose (DE) est avantageusement compris entre 5 et 99, de préférence entre 10 et 80.

Le sucre non réducteur est de préférence un oligoholoside non réducteur renfermant au plus dix motifs glucidiques.

A titre d'exemples de tels sucres non réducteurs, on peut citer les diholosides tels que le tréhalose, les isotréhaloses, le saccharose et les isosaccharoses (« isosucroses » en anglais), les triholosides tels que le mélézitose, le gentianose, le raffinose, l'erlose et l'umbelliférose, les tétraholosides tels que le stachyose, et les pentaholosides tels que le verbascose.

On préfère le saccharose et le tréhalose, et mieux encore le saccharose.

Le composant (a), à savoir le glucide constitué de sucres hydrogénés et/ou de sucres réducteurs et/ou non-réducteurs, représente avantageusement de 30 à 70 % en poids, de préférence de 40 à 60 % en poids de matières sèches de la composition d'encollage. Ces valeurs s'entendent avant l'ajout de l'émulsion anti-poussières.

L'agent de réticulation utilisé dans la présente invention est choisi de préférence parmi les acides polycarboxyliques, les sels et anhydrides d'acides polycarboxyliques, les sels métalliques d'acides minéraux et les sels d'amines et d'ammonium d'acides minéraux

Les acides minéraux et leur sels utilisables en tant qu'agent de réticulation dans la présente invention sont décrits par exemple dans les demandes WO2012/168619, WO2012/168621 et WO2012/072938.

Dans un mode de réalisation préféré, l'agent de réticulation comprend un acide polycarboxylique ou est un acide polycarboxylique. L'acide polycarboxylique peut être un acide polymère (c'est-à-dire obtenu par polymérisation de monomères carboxylés) ou un acide monomère.

Pour limiter la viscosité de la composition d'encollage, cet acide polycarboxylique présente avantageusement une masse molaire moyenne en nombre inférieure ou égale à 50000, de préférence inférieure ou égale à 10000 et avantageusement inférieure ou égale à 5000.

On peut citer à titre d'exemples d'acides polycarboxyliques polymères, les homopolymères et copolymères obtenus à partir de monomères portant au moins un groupe acide carboxylique tel que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique et les monoesters d'acide dicarboxylique insaturés, tels que les maléates et les fumarates d'alkyle en $C_1$-$C_{10}$. Les copolymères peuvent contenir en outre un ou plusieurs monomères vinyliques ou acryliques tels que l'acétate de vinyle, le styrène substitué ou non par des groupements alkyle, hydroxyle ou sulfonyle, ou par un atome d'halogène, le (méth)acrylonitrile, le (méth)acrylamide, les (méth)acrylates alkyle en $C_1$-$C_{10}$, notamment le (méth)acrylate de méthyle, le (méth)acrylate d'éthyle, le (méth)acrylate de n-butyle et le (méth)acrylate d'isobutyle.

Dans un mode de réalisation particulièrement préféré, le composant (b) est ou comprend un acide polycarboxylique monomère. On entend par acide polycarboxylique monomère un acide polycarboxylique qui ne résulte pas de la polymérisation de monomères carboxylés. Un polyacide carboxylique monomère ne comporte donc pas un enchaînement de motifs récurrents.

Il peut s'agir d'un acide dicarboxylique, tricarboxylique ou tetracarboxylique.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique.

Les acides tricarboxyliques englobent, par exemple, l'acide citrique, l'acide tricarballylique, l'acide 1,2,4-butanetricarboxylique, l'acide aconitique, l'acide hémimellitique, l'acide triméllitique et l'acide trimésique ;

On peut citer comme acide tétracarboxylique, par exemple l'acide 1,2,3,4-butanetétracarboxylique et l'acide pyroméllitique.

On utilisera de préférence l'acide citrique.

Le composant (b) représente avantageusement de 30 à 70 % en poids, de préférence de 40 à 60 % en poids de matières sèches de la composition d'encollage de la présente invention. Ces valeurs s'entendent avant l'ajout de l'émulsion anti-poussières.

Le rapport en poids du composant (a) au composant (b) est de préférence compris entre 70/30 et 30/70, en particulier entre 60/40 et 40/60.

La composition d'encollage comprend en outre de préférence un catalyseur d'estérification qui peut être choisi par exemple parmi les bases et les acides de Lewis, tels que les argiles, la silice colloïdale ou non colloïdale, les oxydes métalliques, les sulfates d'urée, les chlorures d'urée et les catalyseurs à base de silicates.

Le catalyseur peut également être un composé contenant du phosphore, par exemple un hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium ou un mélange de ces composés.

La quantité de catalyseur introduite dans la composition d'encollage représente généralement au plus 20 % en poids, avantageusement de 1 à 10 % en poids, rapporté au poids total des composants (a) et (b).

La composition d'encollage conforme à l'invention peut comprendre en outre les additifs conventionnels ci-après dans les proportions suivantes calculées sur la base de 100 parts en poids de composant (a) + (b) :

de 0 à 2 parts de silane, en particulier un aminosilane,
de 0,1 à 3 parts en poids de polyorganosiloxane, de préférence polydiméthylsiloxane (PDMS),
de 0 à 20 parts d'un polyol différent des sucres hydrogénés,
de 0 à 30 parts, de préférence 0 à 20 parts, d'urée,
de 0 à 30 parts d'une charge d'extension (*extender*) choisie parmi les dérivés de la lignine tels que le lignosulfonate d'ammonium (LSA) ou le lignosulfonate de sodium, et les protéines animales ou végétales.

Le rôle de ces additifs est connu et brièvement rappelé :
Le silane est un agent de couplage capable de réagir à la fois avec la surface des fibres et avec les composants du liant.

Le polyorganosiloxane est de préférence un polydiorganosiloxane portant des fonctions capables de réagir avec les constituants (a) ou (b) de la composition d'encollage et/ou avec les groupes silanol de la surface du verre. Ces fonctions sont par exemple les fonctions silanol, carboxyle, anhydride, amine, epoxy ou vinyle, en particulier des fonctions silanol et carboxyle.

Le rôle de ce polyorganosiloxane est de réduire le caractère hydrophile du liant durci et du produit final obtenu.

La silicone réactive est de préférence liquide à température ambiante. Sa masse molaire moyenne est généralement inférieure ou égale à 50 000, de préférence inférieure ou égale à 10 000.

De préférence, la silicone réactive comprend une fonction réactive, avantageusement une fonction silanol, à chacune de ses extrémités de chaîne.

La fonction réactive de la silicone réactive peut être bloquée par un groupement protecteur qui libère ladite fonction réactive sous l'effet de la chaleur. La proportion de silicone réactive dans la composition d'encollage varie généralement de 0,1 à 3 parts, de préférence de 0,3 à 2,5 parts, avantageusement de 0,5 à 2,0 parts et mieux encore de 0,7 à 1,8 parts en poids, pour 100 parts en poids de la somme des composants (a) et (b).

La préparation de la composition d'encollage est effectuée par simple mélange des constituants précités avec de l'eau.

Dans le procédé de la présente invention l'additif anti-poussière, c'est-à-dire l'émulsion huile-dans-eau, est ajoutée à la composition d'encollage de préférence immédiatement avant l'application de celle-ci sur les fibres de laine minérale. L'application de la composition d'encollage sur les fibres minérales se fait de préférence au moyen d'une couronne de pulvérisation comportant une pluralité de buses.

Dans un mode de réalisation, l'émulsion huile-dans-eau est ajoutée dans le réservoir de la composition d'encollage et le mélange obtenu peut être brassé par un système de mélange classique jusqu'à une répartition homogène des gouttelettes d'huile dans la composition à pulvériser.

Dans un autre mode de réalisation, l'émulsion huile-dans-eau est introduite dans la composition d'encollage par injection d'un flux d'émulsion huile-dans-eau dans le flux de composition d'encollage alimentant la couronne de pulvérisation. Le brassage des deux compositions liquides se fait alors grâce à l'écoulement turbulent du mélange dans les conduites de l'installation.

Dans ce deuxième mode de réalisation, l'introduction de l'émulsion huile-dans-eau dans la composition d'encollage se fera au plus quelques dizaines de secondes avant la pulvérisation du mélange par les buses de la couronne de pulvérisation.

La dilution que subit l'émulsion anti-poussières lorsqu'elle est introduite dans la composition d'encollage est comprise entre environ 1/10 et 1/500, en particulier entre 1/20 et 1/200.

La composition d'encollage contenant l'émulsion anti-poussière est de préférence appliquée sur les fibres minérales en une quantité telle que la teneur finale en liant organique, après évaporation de la phase solvant et durcissement dans l'étuve, soit comprise entre environ 3 % et 7 %, en particulier entre 3,5 % et 6,5 % et de manière particulièrement préférée entre 4 et 6 % en poids, rapporté au poids des fibres minérales.

La quantité d'huile minérale appliquée sur les fibres de laine minérale et présente dans le produit final, est comprise entre 0,1 et 2,0 %, de préférence entre 0,2 et 1,0 %, en particulier entre 0,3 et 0,8 %, rapporté au poids des fibres minérales.

**Exemple**

1) Préparation de la composition d'encollage (liant de base)

On prépare des compositions d'encollage comprenant 48 parties en poids de Maltilite® 5575 (sirop de maltitol), 52 parties en poids d'acide citrique et 5 parties en poids d'hypophosphite de sodium. On prépare la composition d'encollage en introduisant, dans un récipient, de l'eau (environ 80 % de la composition finale), le sucre hydrogéné (sirop de maltitol), l'acide citrique et l'hypophosphite de sodium (catalyseur).

2) Préparation d'une émulsion huile-dans-eau anti-poussières selon l'invention

On dissout dans 10 litres d'eau 150 g de Pluronic F-127 (copolymère triséquencé d'oxyde de propylène et d'oxyde d'éthylène) en chauffant à une température d'environ 50 °C et en agitant pendant environ 20 heures jusqu'à dissolution totale du tensioactif. On ajoute ensuite à 4,8 kg de cette solution aqueuse 5,5 litres d'une huile minérale présentant une viscosité cinématique à 20 °C de 2300 $mm^2$/s (ISO 3104), une viscosité cinématique à 40 °C de 500 $mm^2$/s (ISO 3104) et un point éclair de 300 °C (ISO 2592). On introduit ensuite le disperseur Ultra-Turrax® T50 muni d'un outil de dispersion S50N-G45G dans le mélange, puis on fait fonctionner l'Ultra-Turrax à une vitesse de 10000 tr/min pendant 2 min.

Le diamètre moyen des gouttelettes d'huile de l'émulsion obtenue est de 100 $\mu$m.

3) Emulsion huile-dans-eau comparative

On utilise en tant qu'émulsion anti-poussières comparative l'émulsion HydroWax® 88 commercialisée par la société SASOL. Cette émulsion contient environ 52 - 53 % en poids d'une huile minérale à haute viscosité présentant une viscosité cinématique à 40 °C de 500 $mm^2$/s et un point éclair supérieur à 280 °C. D'après les informations fournies par le fabricant, cette émulsion est stabilisée par des agents tensioactifs anioniques. Le diamètre moyen des gouttelettes d'huile, déterminé par granulométrie par diffraction de laser sur un appareil Metasizer 2000 est de 1,8 $\mu$m.

4) Fabrication du matelas de laine minérale

On fabrique de la laine de verre par la technique de la centrifugation interne dans laquelle la composition de verre fondu est transformée en fibres au moyen d'un outil dénommé « assiette de centrifugation », comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La composition d'encollage est mélangée avec chacune des émulsions huile-dans-eau anti-poussières (selon l'invention et comparative) au moyen d'un mélangeur statique. Une émulsion commerciale d'huile silicone réactive (SILRES® BS 5137, commercialisée par la société Wacker) est ajoutée à l'aide d'un mélangeur statique en une concentration de 0,05 %.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 270°C où les constituants de l'encollage polymérisent pour former un liant. Le produit isolant obtenu présente une densité nominale égale à 17,5 kg/$m^3$, une épaisseur nominale d'environ 75 mm et une perte au feu de l'ordre de 5 %.

Les échantillons sont ensuite conservés pendant 3 mois à l'état comprimé, non enveloppé hermétiquement et à température ambiante (20 - 25 °C).

5) Evaluation de l'efficacité anti-poussières

L'efficacité anti-poussières des émulsions huile-dans-eau selon l'invention est évaluée à l'aide d'un dispositif interne. Un échantillon de 20 cm x 30 cm de laine de verre est fixé dans un cadre de manière à ce qu'au moins une de ses faces principales soit libre. Une plaque perforée ayant des dimensions légèrement inférieure à celle de l'échantillon, fixée sur un bras articulé, vient frapper la face libre de l'échantillon. Un dispositif optique compte le nombre de particules libérées.

6) <u>Résultats</u>

Tableau 1 - Nombre de particules de poussière détectées

| Quantité d'huile minérale rapportée aux fibres (%) | Hydrowax® 88 comparatif | Emulsion selon l'invention | Réduction du nombre de particules de poussière |
|---|---|---|---|
| 0,4 | 537* | 321 | 40 % |
| *Valeur moyenne calculée à partir de deux productions distinctes, effectuées au cours d'une même journée (621 (début de journée) - 454 (milieu de journée)) ; toutes les autres valeurs correspondent à une seule production de laine minérale | | | |

Le tableau 1 ci-dessus montre le nombre de particules de poussière détectées pour des échantillons de laine de verre liés avec une même composition d'encollage à base de maltitol et d'acide citrique et contenant chacune 0,05 % d'huile silicone réactive (SILRES® BS 5137) et 0,4 % d'huile minérale à haute viscosité.

Ces résultats montrent que, pour une *même* quantité d'huile, égale à 0,4 % en poids rapporté au poids des fibres minérales, l'émulsion selon l'invention contenant des gouttelettes ayant un diamètre moyen de 100 $\mu$m réduit plus efficacement le nombre de particules qu'une composition selon l'état de la technique (HydroWax® 88) contenant des particules ayant un diamètre moyen de 1,8 $\mu$m.

**Revendications**

**1.** Procédé de fabrication de produits isolants à base de laine minérale, comprenant

- l'application, sur des fibres de laine minérale, d'une composition d'encollage contenant

(a) au moins un glucide choisi parmi les sucres réducteurs, les sucres non réducteurs, les sucres hydrogénés et un mélange de ceux-ci,
(b) au moins un agent de réticulation du ou des glucides,

- l'évaporation de la phase solvant de la composition d'encollage et
- le durcissement thermique de la fraction non volatile de la composition, ledit procédé étant **caractérisé par le fait que** l'on ajoute à la composition d'encollage, de préférence immédiatement avant l'application de celle-ci sur les fibres de laine minérale, une émulsion huile-dans-eau, exempte de polyoside, comprenant de l'eau, une huile minérale et de 0,5 à 5,0 parties en poids pour 100 parties en poids d'huile minérale d'au moins un agent tensioactif, de préférence non-ionique, le diamètre moyen des gouttelettes d'huile de l'émulsion huile-dans-l'eau, déterminé par granulométrie par diffraction laser, étant compris entre plus de 5 $\mu$m et 400 $\mu$m, la teneur en huile de l'émulsion huile-dans-eau étant comprise entre 30 et 70 % en poids, et la quantité d'huile minérale appliquée sur les fibres de laine minérale étant comprise entre 0,1 et 2,0 %, rapporté au poids des fibres minérales.

**2.** Procédé selon la revendication 1, **caractérisé par le fait que** l'agent de réticulation est choisi parmi les acides polycarboxyliques, les sels et anhydrides d'acides polycarboxyliques, les sels métalliques d'acides minéraux et les sels d'amines et d'ammonium d'acides minéraux.

**3.** Procédé selon la revendication 2, **caractérisé par le fait que** l'agent de réticulation est choisi parmi les acides polycarboxyliques, de préférence parmi les acides polycarboxyliques monomères.

**4.** Procédé selon l'une quelconque des revendications précédentes, **caractérisé par le fait que** la proportion de sucres hydrogénés dans le glucide est comprise entre 25 % et 100 % en poids.

**5.** Procédé selon l'une quelconque des revendications précédentes, **caractérisé par le fait que** la composition d'encollage comprend en outre de 0,1 à 3 parts en poids de polyorganosiloxane, de préférence de polydiméthylsiloxane (PDMS), rapporté à 100 parts en poids de constituants (a) + (b).

**6.** Procédé selon la revendication 5, **caractérisé par le fait que** le polyorganosiloxane porte des fonctions capables de réagir avec les constituants (a) ou (b) de la composition d'encollage.

**7.** Procédé selon l'une quelconque des revendications précédentes, **caractérisé par le fait que** l'huile minérale a une viscosité cinématique à 20 °C comprise entre 100 et 6000 mm$^2$/s, de préférence entre 1000 et 5000 mm$^2$/s.

**8.** Procédé selon l'une quelconque des revendications précédentes, **caractérisé par le fait que** le diamètre moyen des gouttelettes d'huile minérale de l'émulsion huile-dans-eau est compris entre 10 $\mu$m et 400 $\mu$m, de préférence entre 20 $\mu$m et 300 $\mu$m et plus préférentiellement entre 40 et 200 $\mu$m.

**9.** Procédé selon l'une quelconque des revendications précédentes, **caractérisé par le fait que** l'émulsion huile-dans-eau est exempte de polymère organique hydrosoluble à température ambiante.

**10.** Procédé selon l'une quelconque des revendications précédentes, **caractérisé par le fait que** l'émulsion huile-dans-eau comprend de 1,2 à 3 parties en poids d'agent tensioactif non-ionique pour 100 parties en poids d'huile minérale.

**11.** Procédé selon l'une quelconque des revendications précédentes, **caractérisé par le fait que** l'application de la composition d'encollage sur les fibres minérales se fait au moyen d'une couronne de pulvérisation comportant une pluralité de buses, et **par le fait que** l'émulsion huile-dans-eau est introduite dans la composition d'encollage par injection d'un flux d'émulsion huile-dans-eau dans le flux de composition d'encollage alimentant la couronne de pulvérisation.

**12.** Procédé selon l'une quelconque des revendications 1 à 10, **caractérisé par le fait que** l'émulsion huile-dans-eau est ajoutée dans un réservoir contenant la composition d'encollage et le mélange obtenu est brassé jusqu'à une répartition homogène des gouttelettes d'huile.

**13.** Procédé selon l'une quelconque des revendications précédentes, **caractérisé par le fait que** la quantité d'huile minérale appliquée sur les fibres de laine minérale est comprise entre 0,2 et 1,0 %, en particulier entre 0,3 et 0,8 %, rapporté au poids des fibres minérales.

**14.** Procédé selon l'une des revendications précédentes, **caractérisée par le fait que** le sucre hydrogéné est choisi parmi les produits d'hydrogénation des monosaccharides, disaccharides, oligosaccharides et polysaccharides et les mélanges de ceux-ci.

**15.** Procédé selon l'une quelconque des revendications précédentes, **caractérisé par le fait que** le sucre hydrogéné est un produit d'hydrogénation d'un hydrolysat d'amidon.

**Patentansprüche**

**1.** Verfahren zur Herstellung von Dämmprodukten auf Basis von Mineralwolle, umfassend

- Aufbringen, auf Mineralwollefasern, einer Bindemittelzusammensetzung, enthaltend

(a) mindestens ein Kohlenhydrat, das aus reduzierenden Zuckern, nicht reduzierenden Zuckern, hydrierten Zuckern und einer Mischung davon ausgewählt ist,
(b) mindestens ein Vernetzungsmittel des oder der Kohlenhydrate,

- Verdampfen der Lösungsmittelphase der Bindemittelzusammensetzung und
- thermisches Härten des nichtflüchtigen Anteils der Zusammensetzung,

wobei das Verfahren **dadurch gekennzeichnet ist, dass** der Bindemittelzusammensetzung, vorzugsweise unmittelbar vor deren Aufbringen auf die Mineralwollefasern, eine polysaccharidfreie Öl-in-Wasser-Emulsion hinzugefügt wird, die Wasser, ein Mineralöl und 0,5 bis 5,0 Gewichtsteile pro 100 Gewichtsteile Mineralöl mindestens eines vorzugsweise nichtionischen Tensid umfasst, wobei der mittlere Durchmesser der Öltröpfchen der Öl-in-Wasser-Emulsion, bestimmt durch Laserbeugungsgranulometrie, zwischen mehr als 5 μm und 400 μm liegt, der Ölgehalt der Öl-in-Wasser-Emulsion zwischen 30 und 70 Gew.-% liegt und die auf die Mineralwollefasern aufgebrachte Menge an Mineralöl zwischen 0,1 und 2,0 %, bezogen auf das Gewicht der Mineralfasern, liegt.

2.  Verfahren nach Anspruch 1, **dadurch gekennzeichnet, dass** das Vernetzungsmittel aus Polycarbonsäuren, Salzen und Anhydriden von Polycarbonsäuren, Metallsalzen von Mineralsäuren und Amin- und Ammoniumsalzen von Mineralsäuren ausgewählt ist.

3.  Verfahren nach Anspruch 2, **dadurch gekennzeichnet, dass** das Vernetzungsmittel aus Polycarbonsäuren, vorzugsweise monomeren Polycarbonsäuren, ausgewählt ist.

4.  Verfahren nach einem der vorstehenden Ansprüche, **dadurch gekennzeichnet, dass** der Anteil an hydrierten Zuckern in dem Kohlenhydrat zwischen 25 Gew.-% und 100 Gew.-% liegt.

5.  Verfahren nach einem der vorstehenden Ansprüche, **dadurch gekennzeichnet, dass** die Bindemittelzusammensetzung ferner 0,1 bis 3 Gewichtsteile Polyorganosiloxan, vorzugsweise Polydimethylsiloxan (PDMS), bezogen auf 100 Gewichtsteile der Bestandteile (a) + (b), umfasst.

6.  Verfahren nach Anspruch 5, **dadurch gekennzeichnet, dass** das Polyorganosiloxan Funktionen trägt, die in der Lage sind, mit den Bestandteilen (a) oder (b) der Leimungszusammensetzung zu reagieren.

7.  Verfahren nach einem der vorstehenden Ansprüche, **dadurch gekennzeichnet, dass** das Mineralöl bei 20 °C eine kinematische Viskosität zwischen 100 und 6000 mm$^2$/s, vorzugsweise zwischen 1000 und 5000 mm$^2$/s, aufweist.

8.  Verfahren nach einem der vorstehenden Ansprüche, **dadurch gekennzeichnet, dass** der mittlere Durchmesser der Mineralöltröpfchen der Öl-in-Wasser-Emulsion zwischen 10 μm und 400 μm, vorzugsweise zwischen 20 μm und 300 μm und mehr bevorzugt zwischen 40 und 200 μm liegt.

9.  Verfahren nach einem der vorstehenden Ansprüche, **dadurch gekennzeichnet, dass** die Öl-in-Wasser-Emulsion frei von organischen Polymeren ist, die bei Raumtemperatur wasserlöslich sind.

10. Verfahren nach einem der vorstehenden Ansprüche, **dadurch gekennzeichnet, dass** die Öl-in-Wasser-Emulsion 1,2 bis 3 Gewichtsteile nichtionisches Tensid pro 100 Gewichtsteile Mineralöl umfasst.

11. Verfahren nach einem der vorstehenden Ansprüche, **dadurch gekennzeichnet, dass** das Aufbringen der Bindemittelzusammensetzung auf die Mineralfasern mittels eines mit einer Vielzahl von Düsen ausgerüsteten Sprühkranzes erfolgt, und dadurch, dass die Öl-in-Wasser-Emulsion in die Bindemittelzusammensetzung eingebracht wird, indem ein Strom der Öl-in-Wasser-Emulsion in den Strom der Bindemittelzusammensetzung eingespritzt wird, der den Sprühkranz speist.

12. Verfahren nach einem der Ansprüche 1 bis 10, **dadurch gekennzeichnet, dass** die Öl-in-Wasser-Emulsion in einen Behälter hinzugefügt wird, der die Bindemittelzusammensetzung enthält, und die erhaltene Mischung bis zu einer homogenen Verteilung der Öltröpfchen umgerührt wird.

13. Verfahren nach einem der vorstehenden Ansprüche, **dadurch gekennzeichnet, dass** die Mineralölmenge, die auf die Mineralwollefasern aufgebracht wird, zwischen 0,2 und 1,0 %, insbesondere zwischen 0,3 und 0,8 %, bezogen auf das Gewicht der Mineralfasern, liegt.

14. Verfahren nach einem der vorstehenden Ansprüche, **dadurch gekennzeichnet, dass** der hydrierte Zucker aus den Hydrierungsprodukten von Monosacchariden, Disacchariden, Oligosacchariden und Polysacchariden und Mischungen davon ausgewählt ist.

15. Verfahren nach einem der vorstehenden Ansprüche, **dadurch gekennzeichnet, dass** der hydrierte Zucker ein Hydrierungsprodukt eines Stärkehydrolysats ist.

**Claims**

1. A process for manufacturing insulating products based on mineral wool, comprising

    - the application, onto mineral wool fibers, of a binder composition containing

        (a) at least one carbohydrate selected from reducing sugars, nonreducing sugars, hydrogenated sugars and a mixture thereof,
        (b) at least one crosslinking agent for crosslinking the carbohydrate(s),

    - the evaporation of the solvent phase of the binder composition and
    - the thermal curing of the non-volatile fraction of the composition,

    said process being **characterized in that** a polysacchande-free oil-in-water emulsion comprising water, a mineral oil and from 0.5 to 5.0 parts by weight per 100 parts by weight of mineral oil of at least one preferably nonionic surfactant, is added to the binder composition, preferably immediately before the application thereof onto the mineral wool fibers, the mean diameter, determined by laser diffraction particle size analysis, of the oil droplets of the oil-in-water emulsion being comprised between more than 5 $\mu$m and 400 $\mu$m, the proportion of oil in the oil-in-water emulsion being comprised between 30 and 70 weight %, and the amount of mineral oil applied to the mineral wool fibers being comprised between 0,1 and 2,0 %, with respect to the mineral fibers.

2. The process as claimed in claim 1, **characterized in that** the crosslinking agent is selected from polycarboxylic acids, salts and anhydrides of polycarboxylic acids, metal salts of mineral acids and amine salts and ammonium salts of mineral acids.

3. The process as claimed in claim 2, **characterized in that** the crosslinking agent is selected from polycarboxylic acids, preferably from monomeric polycarboxylic acids.

4. The process as claimed in any one of the preceding claims, **characterized in that** the proportion of hydrogenated sugars in the carbohydrate is between 25% and 100% by weight.

5. The process as claimed in any one of the preceding claims, **characterized in that** the binder composition further comprises from 0.1 to 3 parts by weight of polyorganosiloxane, preferably of polydimethylsiloxane (PDMS), relative to 100 parts by weight of constituents (a) + (b).

6. The process as claimed in claim 5, **characterized in that** the polyorganosiloxane bears functions capable of reacting with components (a) or (b) of the binder composition.

7. The process as claimed in any one of the preceding claims, **characterized in that** the mineral oil has a kinematic viscosity at 20°C of between 100 and 6000 mm$^2$/s, preferably between 1000 and 5000 mm$^2$/s.

8. The process as claimed in any one of the preceding claims, **characterized in that** the mean diameter of the mineral oil droplets of the oil-in-water emulsion is between 10 $\mu$m and 400 $\mu$m, preferably between 20 $\mu$m and 300 $\mu$m and more preferentially between 40 $\mu$m and 200 $\mu$m.

9. The process as claimed in any one of the preceding claims, **characterized in that** the oil-in-water emulsion is free from organic polymer which is water-soluble at ambient temperature.

10. The process as claimed in any one of the preceding claims, **characterized in that** the oil-in-water emulsion comprises from 1.2 to 3 parts by weight of nonionic surfactant per 100 parts by weight of mineral oil.

11. The process as claimed in any one of the preceding claims, **characterized in that** the application of the binder composition to the mineral fibers is carried out by means of a spraying ring comprising a plurality of nozzles, and **in that** the oil-in-water emulsion is introduced into the binder composition by injecting a flow of oil-in-water emulsion into the flow of binder composition feeding the spraying ring.

12. The process as claimed in any one of claims 1 to 10, **characterized in that** the oil-in-water emulsion is added to a tank containing the binder composition and the resulting mixture is mixed until there is a uniform distribution of the oil droplets.

13. The process as claimed in any one of the preceding claims, **characterized in that** the amount of mineral oil applied onto the mineral wool fibers is between 0.2 and 1.0%, in particular between 0.3 and 0.8%, relative to the weight of the mineral fibers.

14. The process as claimed in any one of the preceding claims, **characterized in that** the hydrogenated sugar is selected from the hydrogenation products of monosaccharides, disaccharides, oligosaccharides and polysaccharides and mixtures thereof.

15. The process as claimed in any one of the preceding claims, **characterized in that** the hydrogenated sugar is a hydrogenation product of a starch hydrolyzate.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8197587 B
- US 20110223364 A
- WO 2010029266 A
- WO 2013014399 A
- WO 2015181458 A
- WO 2012168619 A
- WO 2012168621 A
- WO 2012072938 A
- WO 2015132518 A
- WO 2012118939 A